# EUROPEAN PATENT APPLICATION

(11) **EP 1 732 305 A1**
(43) Date of publication of application: **13.12.2006**
(21) Application number: 06250807.2
(22) Date of filing: 15.02.2006
(51) Int. Cl.: H04N 1/32, G06F 17/21

(54) **Image storing device, image storing system and image data control apparatus**

(30) Priority: 07.06.2005 JP 2005166680
(71) Applicant: KONICA MINOLTA BUSINESS TECHNOLOGIES, INC., Tokyo 100-0005 (JP)
(72) Inventor: Niitsma, Tetsuya c/o Konica Minolta Business, Hachioji-shi Tokyo, 192-8505 (JP)
(74) Representative: Rees, Alexander Ellison

(57) **Abstract**

An image storing device includes: a first memory section for storing counted value of a first counter that counts a first serial number given across jobs each including at least one image; a first control section for superimposing the first serial number of the first counter as an image onto each of first image data of the jobs to generate second image data; and an image memory section for storing the second image data.

## Description

### BACKGROUND OF THE INVENTION

The present invention relates to an image storing device, an image storing system and an image data control apparatus.

Heretofore, a configuration has been considered in a facsimile apparatus for reading an image recorded onto a document to send it to a destination as image information and recording the image of the image information received from a sender onto recording sheets, wherein the configuration superimposes a page number onto image information read from a two-sided original document from one side to the other as an image (digital data) to send it to a destination, in which a recipient can rearrange the record sheets with the image information recorded thereon in the order of the page number (see, for example, Patent Document 1).

Further, a configuration has been considered in an image forming apparatus for recording image data onto recording sheets, wherein the configuration can record, in addition to an image of image data, a page number that is given across a plurality of image forming jobs onto recording sheets (see, for example, Patent Document 2).

[Patent Document 1] Japanese Patent Publication Laid-Open No. 2002-57872.

[Patent Document 2] Japanese Patent Publication Laid-Open No. 2003-274151.

Recently, it is sometimes required to prove uniqueness that the image data has not been altered or added other modifications from the generation, reception and transmission of the image data. However, the conventional configuration for superimposing a page number onto image data in the image reading could not prove the uniqueness of the image data, because the same page number indicating the same information among jobs was superimposed onto the image data.

Further, the conventional configuration for recording the page number in the image recording could record information across the image forming jobs, but could not prove the uniqueness of the image data from its generation.

### SUMMARY OF THE INVENTION

An object of the present invention is to prove the uniqueness of image data.

The above object will be achieved by any one of the following Structures.

An image storing device comprising:
(a) a first memory section for storing counted value of a first counter that counts a first serial number given across jobs each including at least one image;
(b) a first control section for superimposing the first serial number of the first counter as an image onto each of first image data of the jobs to generate second image data; and
(c) an image memory section for storing the second image data.

An image storing system comprising:
the image storing device and the image data control apparatus, wherein the image data control apparatus comprises:
   a second communication section for communicating with the image storing device and an external device;
   a second memory section for storing the second image data;
   a time stamp obtaining section for obtaining a time stamp corresponding to the second image data received from the image storing device through the second communication section; and
   a second control section for storing the received second image data in the second memory section, by associating with the first serial number received from the image storing device through the second communication section in accordance with the second image data and the time stamp obtained by the time stamp obtaining section, and when receiving the first serial number from the external device through the second communication section, the second control section reading the second image data and time stamp corresponding to the received first serial number from the second memory section, and sending the read second image data and time stamp to the external device through the second communication section.

An image storing system comprising:
(a) the image storing device; and
(b) an image data control apparatus for controlling the second image data generated by the image storing device,
wherein the image storing system includes a password generation section for generating a password corresponding to the second image data,
the image storing device includes a first communication section for communicating with the image data control apparatus,
the first control section superimposes the character information including the password generated by the password generation section as an image onto the first image data to generate the second image data, and sends the generated second image data and the first serial number to the image data control apparatus through the first communication section,
the image data control apparatus includes:
(1) a second communication section for communicating with the image storing device and an external device;
(2) a second memory section for storing the second image data;
(3) a time stamp obtaining section for obtaining a time stamp corresponding to the second image data received from the image storing device through the second communication section; and
(4) a second control section for storing the received second image data in the second memory section, by associating with the first serial number received from the image storing device through the second communication section in according with the second image data, the time stamp obtained by the time stamp obtaining section and the password generated by the password generation section, for receiving the first serial number and the password from the external device through the second communication section, and for reading the second image data and time stamp corresponding to the received password and to the first serial number from the second memory section and sending to the external device through the second communication section when the received password is identical to the password stored in the second memory section.

An image data control apparatus comprising:
(a) a communication section for communicating with an image storing device that superimposes a first serial number given across jobs each including at least one image as an image onto first image data of the jobs to generate and store second image data, and to an external device;
(b) a memory section for storing second image data;
(c) a time stamp obtaining section for obtaining a time stamp corresponding to the second image data received from the image storing device through the communication section; and
(d) a control section for storing the received second image data in the memory section, by associating with the first serial number received from the image storing device through the communication section in accordance with the second image data and the time stamp obtained by the time stamp obtaining section, when receiving the first serial number from the external device through the communication section, the control section reading the second image data and time stamp corresponding to the received first serial number from the memory section, and sending them to the external device through the communication section.

An image data control apparatus comprising:
(a) a communication section for communicating with an image storing device that superimposes a first serial number given across jobs each including at least one image and a password as an image onto first image data of the jobs to generate and store second image data, and to an external device;
(b) an image memory section for storing second image data;
(c) a time stamp obtaining section for obtaining a time stamp corresponding to the second image data received from the image storing device through the second communication section; and
(d) a control section for storing the received second image data in the memory section, by associating with the first serial number received from the image storing device through the communication section in accordance with the second image data, the time stamp obtained by the time stamp obtaining section and a password, receiving the first serial number and the password from the external device through the communication section, and for reading the second image data and time stamp corresponding to the received password and to the first serial number from the memory section and sending them to the external device through the communication section when the received password is identical to the password stored in the second memory section.

### BRIEF DESCRIPTION OF THE DRAWINGS

Fig. 1 is a block diagram showing the configuration of a multi-function printer (MFP) 10 of a first embodiment according to the present invention;
Fig. 2(a) is a view showing the configuration of a Bates stamp F2, Fig. 2(b) is a view showing the configuration of image data F3 on which the Bates stamp F2 is superimposed;
Fig. 3 is a view showing an insertion example of image data F431 to F433 into image data F41 to F44;
Fig. 4 is a flowchart showing a generation process of image data onto which Bates stamp is superimposed;
Figs. 5(a) and 5(b) are views showing the configurations of operation screens, wherein Fig. 5(a) is a view showing the configuration of an operation screen 14A, and Fig. 5(b) is a view showing the configuration of an operation screen 14B;
Fig. 6 is a block diagram showing the configuration of an image reading system 1 of a second embodiment according to the present invention;
Fig. 7 is a block diagram showing the inside configuration of a DB server 30;
Fig. 8 is a block diagram showing the inside configuration of a time stamp authority (TSA) server 40;
Fig. 9 is a block diagram showing the inside configuration of a personal computer (PC) 50;
Fig. 10 is a flowchart showing the flows of data and processing in the image reading system 1; and
Fig. 11 is a view showing image data F5 on which a Bates stamp including a password F64 is superimposed.

### DETAILED DESCRIPTION OF THE PREFERRED EMBODIMENTS

Hereinafter, first and second embodiments according to the present invention will be sequentially described with reference to the accompanying drawings. However, it is to be understood that the scope of the present invention is not limited to the examples illustrated in the drawings.

### (First embodiment)

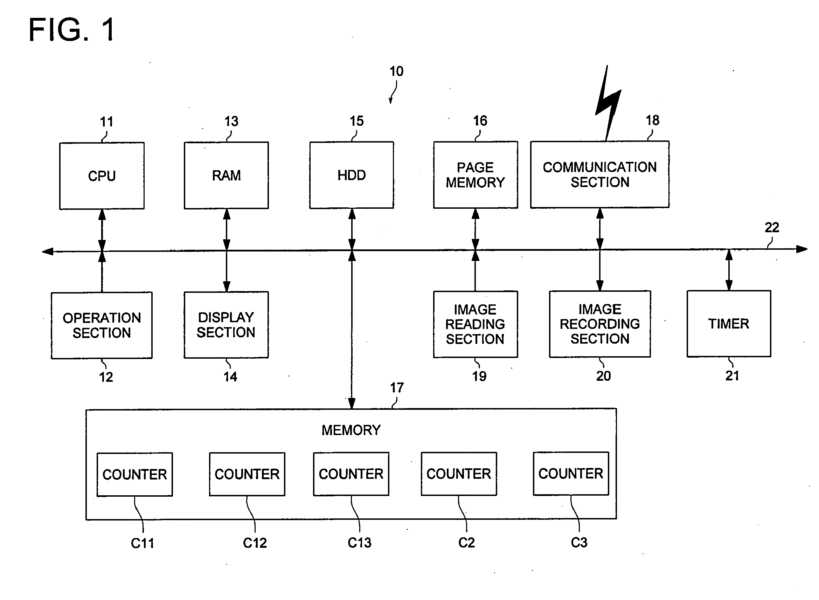

The first embodiment according to the present invention is described with reference to Figs. 1 to 5(b). A device according to the embodiment is first described with reference to Fig. 1. Fig. 1 shows the configuration of an MFP 10.

At first, the MFP (Multi-Function Printer) 10 as an image storing device of the embodiment is described. The MFP 10 is configured by including a CPU (Central Processing Unit) 11, an operation section 12, a RAM (Random Access Memory) 13, a display section 14, an HDD (Hard Disk Drive) 15 as a memory section, a page memory 16, a memory 17 as a first memory section, a communication section 18 as a first communication section, an image reading section 19, an image recording section 20, and a timer 21, wherein each of the sections are connected to a bus 22.

The CPU 11 centrally controls the sections within the MFP 10. The CPU 11 reads designated programs among from the system programs and various application programs stored in the HDD 15 to expand the programs in the RAM 13, and carries out various processing in cooperation with the programs expanded in the RAM 13. A first control section is configured by the cooperation of the CPU 11 and the programs within the RAM 13.

The operation section 12, including an input key and the like, receives information that is operation-input from a user as an input signal, and outputs the input signal to the CPU 11. The RAM 13 has a work area for storing the programs, input data and process results and the like to temporarily store the information. The display section 14 is configured by an LCD (Liquid Crystal Display) and the like, and displays various types of information based on a display signal from the CPU 11. The display section 14 may also configure a touch panel with the operation section 12 in an integral manner.

The HDD 15 readably and writably stores various data such as image data and different programs. The HDD 15 stores a generation program of image data onto which Bates stamp is superimposed that is described below. The HDD 15 is assumed to store a plurality of company names as character information.

The page memory 16 is an image memory for storing image data by page unit. The communication section 18 is configured by an NIC (Network Interface Card) and the like, and sends and receives various data with an external device such as a server 40 through a communication network N.

The memory 17 stores counted values of various counters for counting a serial number used for the Bates stamp indicating the uniqueness of the image data. The memory 17 stores counters C11, C12, C13 as first counters, a counter C2 as a second counter, and a third counter C3 as a third counter. The counters C11, C12, C13 correspond to AA Company, BB Company, and CC Company respectively, wherein the counters are assumed to be counted up for each job across jobs. In other words, the counters C11, C12, C13 count the sequential number (job number) across jobs for each of the companies. It is to be noted that the number of counters (number of companies) is not limited to three, and may be at least one of an arbitrary number.

Herein, the job includes an image reading job, an image sending job, an image receiving job and other related jobs. The image reading job is assumed to be a group of image data to be read by the image reading section 19 in batch, wherein each job has at least one image data. The image sending job is a group of image data to be sent to another device that is connected to the communication network through the communication section 18, or a group of image data to be sent to a facsimile apparatus by a module not shown. The image receiving job is a group of image data received from another device that is connected to the communication network through the communication section 18, or a group of image data received from the facsimile apparatus by a module not shown.

The counter C2 is counted up without across the jobs. In other words, the counter C2 counts the sequential number (page number) of the image data for each job. The counter C3 is counted up without across the jobs, when the image data is inserted. In other words, the counter C3 counts the sequential number (inserted page number) of the inserted image data for each job.

The image reading section 19 reads an image recorded onto a document, and generates black and white (a multi-level including a binary or an intermediate value between black and white) image data of the image. The image reading section 19 has a light source for irradiating a light onto the document, a CCD (Charge Coupled Device) for photoelectrically converting a reflection light from the document, an image sensor such as a CMOS (Complementary Metal-Oxide Semiconductor), a scanner for moving the light to be irradiated onto the document, and an image processing section for applying various conversions and processing to electrical signals read by the image sensor to output image data.

The image recording section 20, which is a printer of a system, such as an inkjet, laser, thermal-transfer or dot-impact, forms and records an image onto a recording medium such as a recording sheet based on the image data that is input from the CPU 11 and the like.

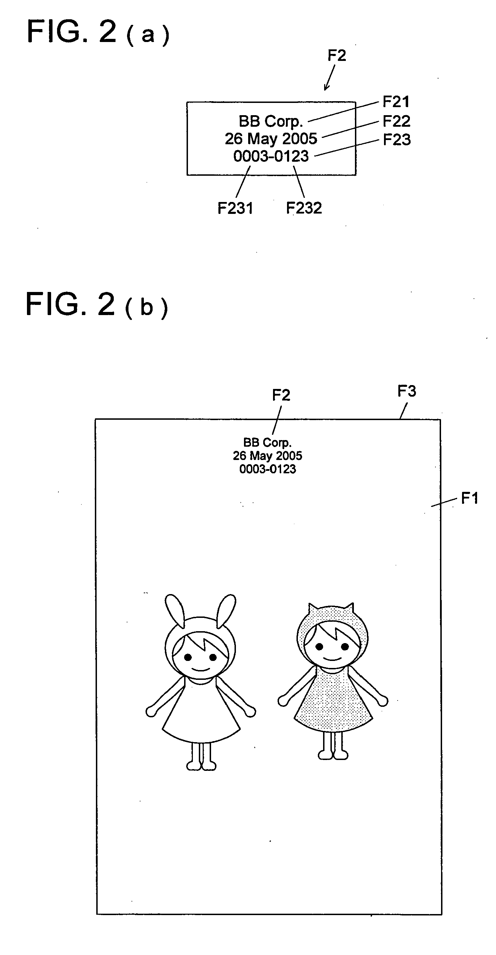

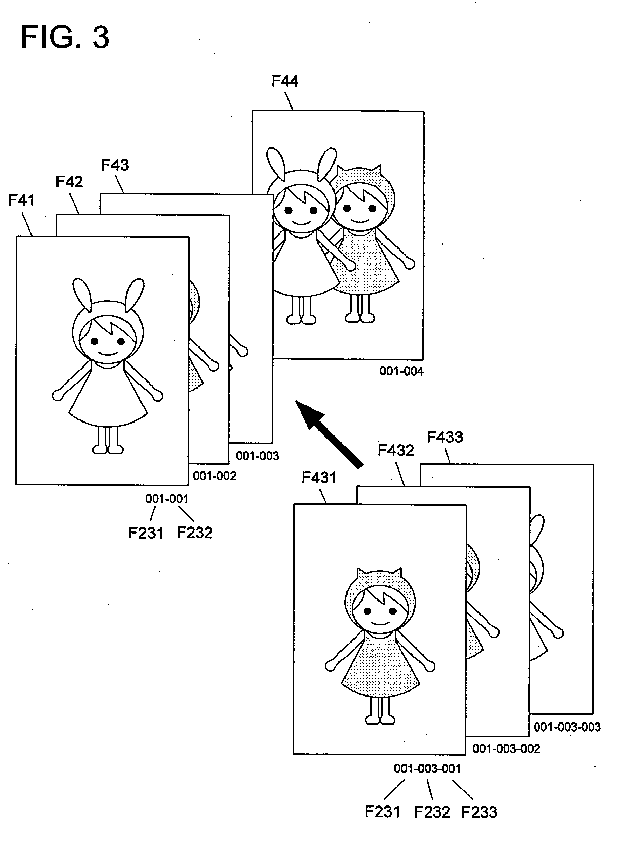

Next, a Bates stamp superimposed onto image data as an image in the present embodiment with reference to Figs. 2(a) and 2(b), and Fig. 3. Fig. 2(a) shows the configuration of a Bates stamp F2. Fig. 2(b) shows the configuration of image data F3 on which the Bates stamp F2 is superimposed. Fig. 3 shows an insertion example of image data F431 to F433 into image data F41 to F44.

As shown in Fig. 2(a), the Bates stamp F2 indicating the uniqueness of the image data has a company name F21, a date F22 and a serial number F23. The company name F21 is assumed to be any of AA Company, BB Company or CC Company, but not limited to this context. For example, it may be an attribute of a group by which the image data is desired to be controlled, such as a user or a URL (for example, http://A.com/) in place of the company name. The date F22 is assumed to be a year, month, and date when the Bates stamp was superimposed onto the image data, but not limited to this context, and may be another time expression, such as including an hour, minute, and second.

The serial number F23 is divided into two or three number parts separated by the hyphen(s). However, the serial number F23 is not limited to the configuration of dividing the serial number by the hyphen(s), and may be the serial number in which at least several divided number parts can be identified respectively. When the superimposition destination of the Bates stamp F2 is not the insertion image data described below, the serial number F23 has two number parts of a first serial number F231 counted by the counter C11, C12 or C13, and a second serial number F232 counted by the counter C2.

As shown in Fig. 2(b), the image data of the Bates stamp F2 is superimposed as an image onto the image of first image F1 generated by the image reading section 19, thereby the second image data F3 is generated.

In superimposition, when the first image data F1 and the Bates stamp F2 are binary (black and white), the pixel value after superimposition is determined by logic such as OR (black priority), EOR (white when the two pixel values are identical) for each pixel, and in the case in which the image data is multi-level (black and white, and their intermediate color), the additional value of the two pixel values, average value of the two pixel values or the like is determined as the pixel value after superimposition for each pixel.

Next, considering a case in which, in the image data F41 to F44 to which the serial number having two parts of the first serial number F231 and the second serial number F232 corresponds, the image data F431 to F433 generated by the subsequent image reading are inserted between the image data F43 and F44 as the insertion image data as shown in Fig. 3. The serial number F23 of the image data F431 to F433 is corresponded by the serial number having three parts of the first serial number F231, second serial number F232, and a third serial number F233 that is counted by the counter C3. The first serial number F231 of the image data to be inserted F431 to F433 is the same number as the first serial number F231 of the image data F41 to F44 of the same job including the image data F43 which is the insertion destination. The second serial number F232 of the image data to be inserted F431 to F433 is the same number as the second serial number F232 of the image data F43 which is the insertion destination. The third serial number F233 of the image data F431 to F433 is counted up for each image data.

Further, the first, second and third serial numbers are less than eight digits respectively. Because humans can easily recognize each of the serial numbers if they are less than eight digits.

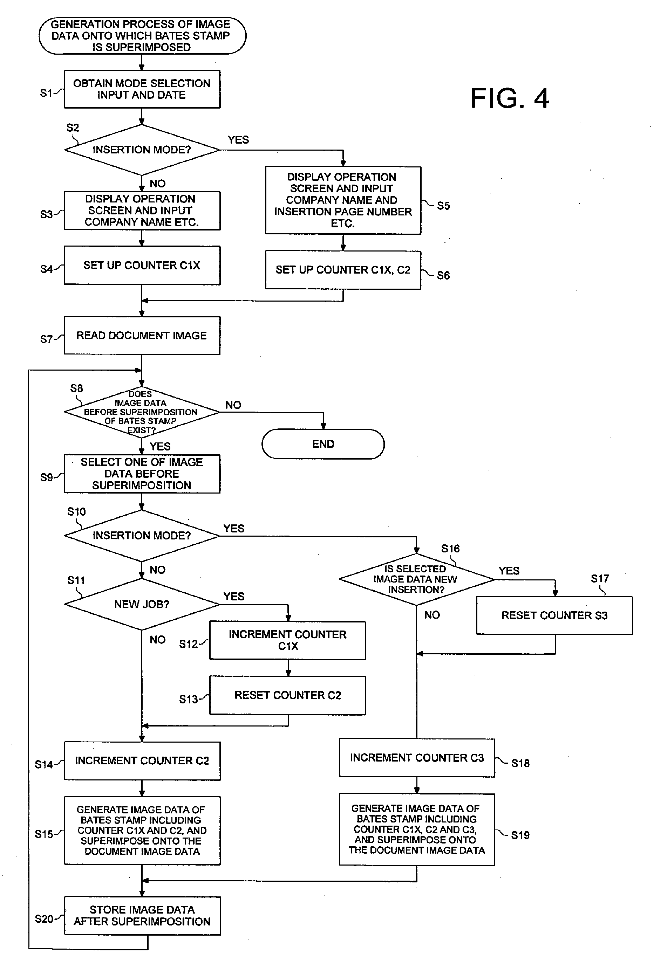

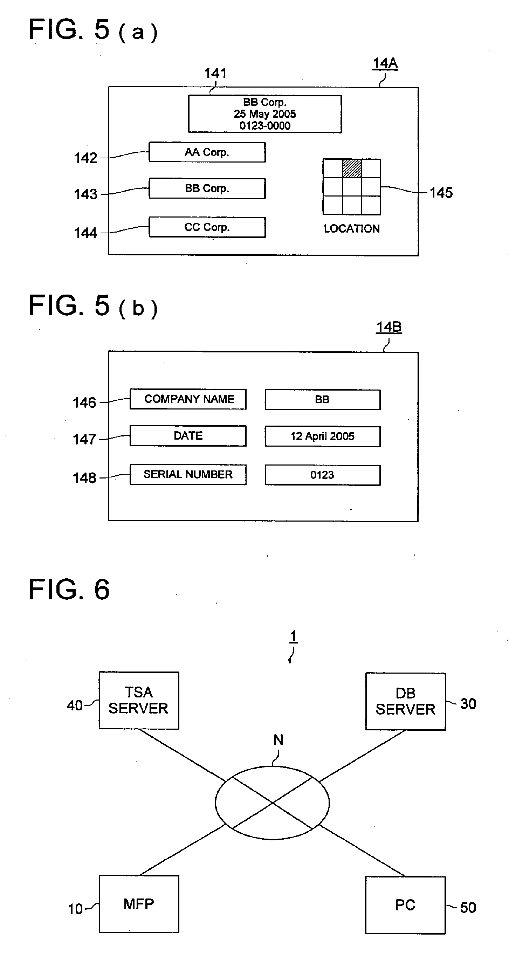

Next, the operation of the MFP 10 is described with reference to Fig. 4 and Figs. 5(a) to 5(b). Fig. 4 shows the flow of the generation process of image data on which Bates stamp is superimposed. Figs. 5(a) and 5(b) show the configurations of operation screens, wherein Fig. 5(a) shows the configuration of an operation screen 14A, and Fig. 5(b) shows the configuration of an operation screen 14B.

The generation process of image data on which Bates stamp is superimposed that is carried out in MFP 10 is described. The generation process of image data on which Bates stamp is superimposed is a processing for reading an image of a document, and superimposing the Bates stamp onto image data including: image data generated by the reading; image data to be sent to another device that is connected to the communication network through the communication section 18; image data to be sent to a facsimile apparatus by a module not shown; image data received from another device that is connected to the communication network through the communication section 18; and image data received from a facsimile apparatus by a module not shown to generate image data. Hereinafter, the generation process of image data on which Bates stamp is superimposed relative to the image data generated by reading an image of a document is described as an example.

For example, a document on which an image to be read is recorded is set to the image reading section 19, and with a trigger of an instruction to execute the generation process of image data on which Bates stamp is superimposed through the operation section 12 from an operator, a generation program of image data on which Bates stamp is superimposed is accordingly read and expanded in the RAM 13, and the generation process of image data on which Bates stamp is superimposed is carried out due to the cooperation of the CPU 11 and the expanded generation program of image data on which Bates stamp is superimposed.

In the embodiment, each of the counters stored in the memory 17 is assumed to maintain the counted value that is counted in the previous generation process of image data on which Bates stamp is superimposed.

At first, a mode selection screen is displayed in the display section 14, and a mode selection input from the operator based on the mode selection screen is received through the operation section 12, and then current date information is obtained from the timer 21 (Step S1). The mode is assumed to include a normal mode of carrying out the normal image reading and an insertion mode of carrying out the image reading of the image to be inserted to the image data after Bates stamp superimposition, and the selection input thereof is carried out in Step S1.

Then, it is determined whether the mode input in Step S1 is the insertion mode or not (Stet S2). If not the insertion mode (Step S2; NO), it is the normal mode, so that an operation screen for the normal mode is displayed in the display section 14, in which inputs of a company corresponding to the document to be read and position information of Bates stamp on the image from the operator are received (Step S3).

In Step S3, for example, the operation screen 14A shown in Fig. 5(a) is displayed. The operation screen 14A has a Bates stamp content section 141 for displaying the content of the bate stamp, a company selection sections 142 to 144 as the input marks corresponding to AA Company, BB Company and CC Company respectively, and a position input section 145 for inputting a position of the Bates stamp on the image. In the company selection section 142 to 144 and the position input section 145, the company selection information and Bates stamp position information are obtained by a key input or a touch input of the operation section 12.

More particularly, when the company selection section 143 is selected and input in the state in which no information is displayed in the Bates stamp information section 141, the operation screen 14B shown in Fig. 5(b) is displayed in the display section 14. The operation screen 14B has a company name 146 of the selected company, a date 147 of the date information obtained in Step S1, and a number 148 which is the counted value of the counter C1, C2 or C3 corresponding to the company name 146 (hereinafter, the counter corresponding to the selected company is represented as a counter C1X (X = 1, 2, or 3)) plus one. The number 148 will be the number for identifying the job that will read the image.

Then, the operation screen 14A is redisplayed, and the selected Bates stamp content is displayed in the Bates stamp content section 141. For example, as shown in Fig. 5(a), the Bates stamp information section 141 includes the selected company name, the date, and the serial number (the number 148 + "-" + the reset value of the counter C2).

In accordance with the company name input in the Step S3, the counter C1X of the memory 17 is set (Step S4).

If the mode is the insertion mode (Step S2; YES), the operation screen for the insertion mode is displayed in the display section 14, in which inputs of a Bates stamp page number of the insertion destination page and position information of Bates stamp on the image from the operator are received (Step S5).

In accordance with the company name input in Step S5, the counter C1X of the memory 17 is set, and the insertion destination page number input in Step S5 is set to the counter C2 of the memory 17 (Step S6).

Then, the images of the document are sequentially read by the image reading section 19, and image data of the read images are generated, and stored the image data to the page memory 16 (Step S7). In other words, the image data before Bates stamp superimposition are generated and stored.

Then, it is determined whether any image data before Bates stamp superimposition exits (is stored in the page memory 16) (Step S8). If the image data before Bates stamp superimposition exists (Step S8; YES), one of the unselected image data is selected and read from the page memory 16 in the reading order (Step S9).

Then, it is determined whether the mode is the insertion mode (Step S10). If not the insertion mode (Step S10; NO), the mode is the normal mode, and it is determined whether the image data currently selected in Step S9 corresponds to a new job (is a first image data) (Step S11). If the image data corresponds to the new job (Step S11; YES), the counted value of the counter C1X is incremented by one (Step S12). The counted value of the counter C2 is reset (Step S13). Then, the counted value of the counter C2 is incremented by one (Step S14). If the image data does not correspond to the new job (Step S11; NO), the processing is moved to Step S14.

Then, image data of the Bates stamp including the company name of the company input in Step S3, the date of the date information obtained in Step S1, and the serial number made of the counted values of the counters C1X and C2 is generated, and the generated image data of the Bates stamp is superimposed as an image at the position of the position information input in Step S3 onto the image data currently selected in Step S9, thereby image data after superimposition is generated (Step S15).

If the mode is the insertion mode (Step S10; YES), it is determined whether the image data currently selected in Step S9 is a new insertion (a first image data of the image reading for insertion) (Step S16). If the image data is the new insertion (Step S16; YES), the counted value of the counter C3 is reset (Step S17). Then, the counted value of the counter C3 is incremented by one (Step S18). If the image data is not the new insertion (Step S16; NO), the processing is moved to Step S18.

Then, image data of the Bates stamp including the company name of the company input in Step S5, the date of the date information obtained in Step S1, and the serial number made of the counted values of the counters C1X, C2 and C3 is generated, and the generated image data of the Bates stamp is superimposed as an image at the position of the position information input in Step S5 onto the image data currently selected in Step S9 as an image, thereby image data after superimposition is generated (Step S19).

Then, the image data after superimposition is stored in the HDD 15 (Step S20), and the processing is moved to Step S8. If no image data before superimposition exits (Step S8; NO), the generation process of image data on which Bates stamp is superimposed ends.

As described above, according to the present embodiment, the Bates stamp includes the second serial number that is different for each page using the first serial number across the jobs counted by the counter C1X, so that the uniqueness of the image data generated by the image reading in the image reading section 19 can be proved for each page. Further, the Bates stamp includes the first serial number that is different for each job, so that the uniqueness of the generated image data can be proved for each job.

Further, the Bates stamp includes, in addition to the serial number, the character information (the company name and date) corresponding thereto, so that uniqueness of the image data generated by the image reading can be proved more simply. In addition, the counters C1 to C3 corresponding to each of the companies are provided, so that the first serial number corresponding to each of the companies can be generated.

Further, the serial number is divided into the first, second and third serial numbers, so that each of the serial numbers is shortened, and thereby the uniqueness of the image data generated by the image reading can be proved more simply. In addition, the first, second and third serial numbers respectively are less than eight digits, so that the operator can easily recognize each serial number, and the uniqueness of the image data generated by the image reading can be proved more simply.

Further, the second serial number without across the jobs can be generated simply by the counter C2.

Further, the third serial number with which the insertion image data is easily retrieved can be generated simply by the counter C3.

Incidentally, the present embodiment was described taking an example of the image reading job, but it is also applicable to the image receiving job and the image sending job. Further, the present embodiment was described taking an example that the serial number is counted up for each job as the sequential number across the jobs, but the configuration is also allowable in which the serial number is counted up for each image. More particularly, for example, the configuration is made such that the serial number is appended for each page of a job 1 and a job 2, wherein the serial number is not reset even if the job is changed, and the serial number for the job 2 is the sequential number from the job 1, namely, 3, 4, 5 for job 1 and 6, 7, 8 for job 2, sequentially from the first page of each of the jobs. In this configuration, the Bates stamp includes the first serial number that is different for each page across the jobs, so that the uniqueness of the generated image data can be proved for each page.

Further, the embodiment was described assuming that the Bates stamp includes the company name, date and serial number, but is not limited to this, and the configuration is also allowable in which the Bates stamp includes at least the serial number. Further, the embodiment was described assuming that the company name and the counter C1X correspond one-on-one, but the embodiment is not limited to this context, and may assume the configuration that associates a plurality of counters C1 with one company name.

### (Second embodiment)

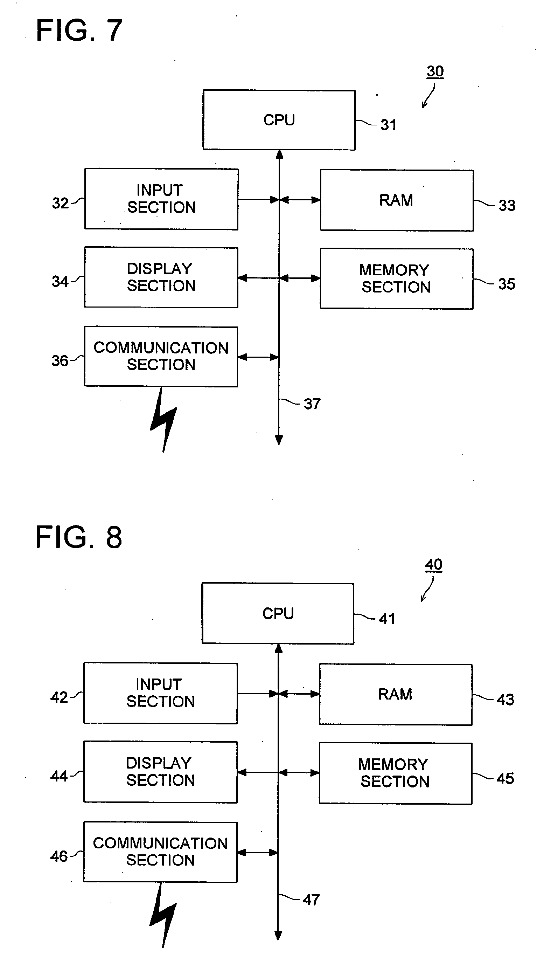

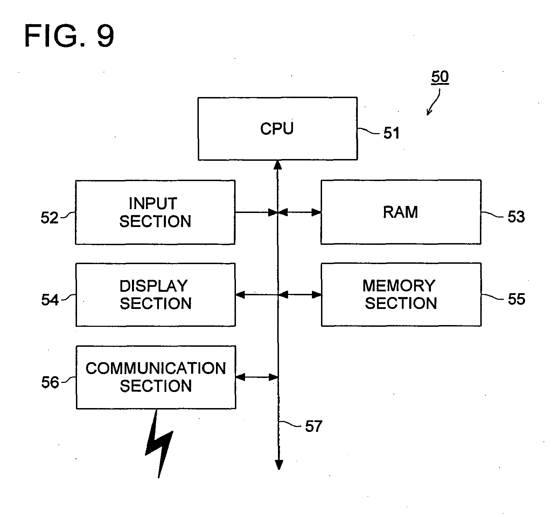

The second embodiment according to the present invention is described with reference to Figs. 6 to 11. At first, the device configuration of the present embodiment is described with reference to Figs. 6 to 9. Fig. 6 shows the configuration of an image reading system 1. Fig. 7 shows the inside configuration of a DB (DataBase) server 30. Fig. 8 shows the inside configuration of a TSA (Time Stamp Authority) server 40. Fig. 9 shows the inside configuration of a PC 50.

As shown in Fig. 6, the image reading system 1 of the present embodiment is configured by including the MFP 10, the DB server 30 as an image data control apparatus, the TSA server 40, and the PC 50 as an external device, wherein each of the devices are communicated and connected through the communication network N.

The communication network N, for example a WAN (Wide Area Network), may include a LAN (Local Area Network), and the configuration is allowable, including the telephone network, ISDN (Integrated Services Digital Network) network, broadband communication network, dedicated line, mobile communication network, communication satellite network, CATV (Community Antenna TeleVision) network, optical network or wireless communication network, as well as internet service providers connecting them and the like.

The MFP 10 has the same configuration as the first embodiment, and has a function of superimposing the Bates stamp as an image onto the image data generated through the image reading by the image reading section 19. The communication section 18 of the MFP 10 is connected to the communication network N.

The DB server 30 is a server device for storing and controlling the image data after Bates stamp superimposition. Herein, it is assumed that the DB server 30 is a server of BB Company. Although not shown, it is assumed that the DB server is practically provided for each company.

As shown in Fig. 7, the DB server 30 is configured by including a CPU 31, an input section 32, a RAM 33, a display section 34, a memory section 35 as a second memory section, and a communication section 36 as a second communication section, wherein the sections are connected through a bus 37.

The RAM 33 is the same as the RAM 13 of the MFP 10. The CPU 31 centrally controls the sections of DB server 30. CPU 31 reads designated programs among from the system programs and various application programs stored in the memory section 35 to expand them in RAM 33, and carries out various processing in cooperation with the programs expanded in the RAM 33. A time stamp obtaining section, and a control section as a second control section are configured by the cooperation of the CPU 31 and the programs within the RAM 33.

The input section 32 is provided with a key input device such as a keyboard, and outputs operation information based on a key input from the operator to the CPU 31. The input section 32 may include a pointing device such as a mouse. The display section 34 is a display section such as a CRT (Cathode Ray Tube), an LCD or other related components, and displays various types of information based on the display information input from the CPU 31.

The memory section 35 is a memory section such as an HDD for writably and readably storing various types of data, which, in particular, stores the DB having the image data including the Bates stamp and the time stamp with the serial number as a key. The communication section 36 is configured by a modem, a router, a network card and the like, and is connected to the network N to mediate communications with the devices on the communication network N.

The TSA server 40 is a server device for issuing a time stamp used for digital authentication. As shown in Fig. 8, the TSA server 40 is configured by including a CPU 41, an input section 42, a RAM 43, a display section 44, a memory section 45, and a communication section 46, wherein each of the sections is connected through a bus 47. The CPU 41, input section 42, RAM 43, display section 44, memory section 45, communication section 46 and bus 47 respectively have the same configurations as the CPU 31, input section 32, RAM 33, display section 34, memory section 35, communication section 36, and bus 37 of the DB server 30.

The CPU 41 centrally controls the sections of the TSA server 40, reading designated programs among from the system programs and various application programs stored in the memory section 45 to expand the programs in the RAM 43, and carrying out various processings in cooperation with the programs expanded in the RAM 43. The memory section 45 stores the hash value of the image data and the time stamp by associating with each other.

The PC 50 as the client device is a device a user requiring digital authentication uses. As shown in Fig. 9, the PC 50 is configured by including a CPU 51, an input section 52, a RAM 53, a display section 54, a memory section 55, and a communication section 56, wherein the sections are connected through a bus 57. The CPU 51, input section 52, RAM 53, display section 54, memory section 55, communication section 56 and bus 57 respectively have the same configurations as the CPU 31, input section 32, RAM 33, display section 34, memory section 35, communication section 36 and bus 37 of the DB server 30.

The CPU 51 centrally controls the sections of the PC 50, reading designated programs among from the system programs and various application programs stored in the memory section 55 to expand the programs in the RAM 53, and carrying out various processing in cooperation with the programs expanded in the RAM 53.

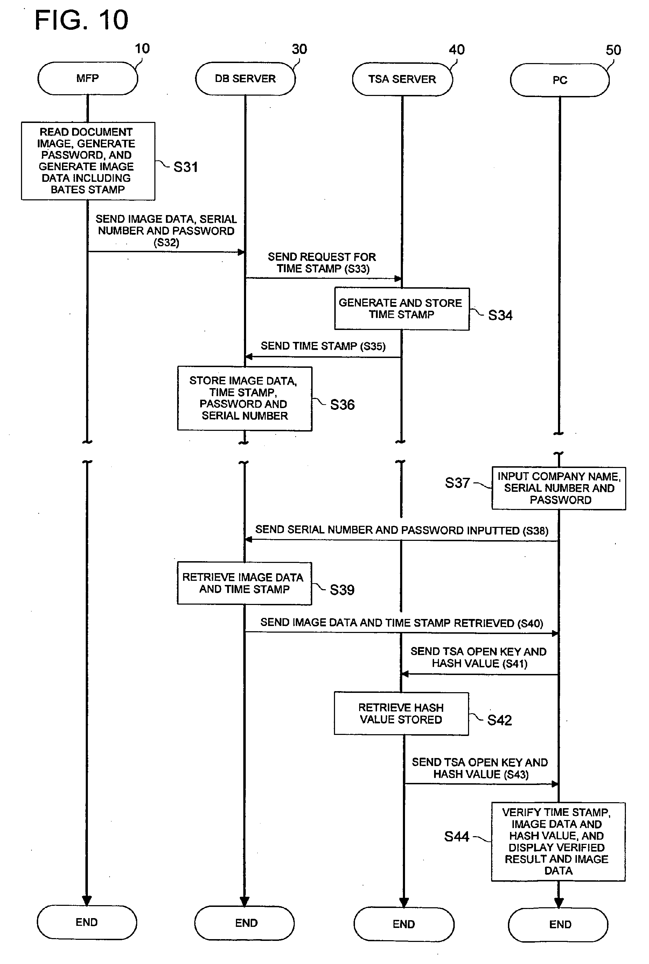

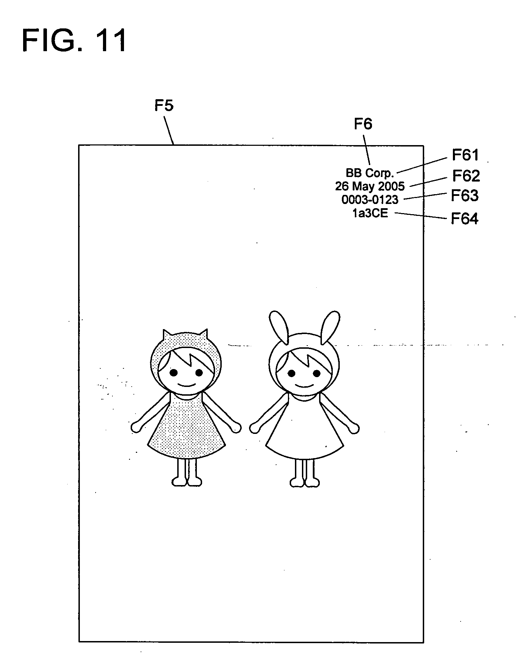

Next, the operation of the image reading system 1 will be described with reference to Fig. 10 and Fig. 11. Fig. 10 shows the flows of the data and processing in the image reading system 1. Fig. 11 shows image data F5 on which a Bates stamp including a password F64 is superimposed.

At first, the registration process of image data including Bates stamp to the DB server 30 is described.

As shown in Fig. 10, in the MFP 10, an image is first read from a document by the image reading section 19 to generate image data, and a password corresponding to the image data is generated, and image data of a Bates stamp including, similarly to the image reading process in the first embodiment, a company name, a date, a serial number made of the counted values of the counters C1X and C2 (or the counters C1X, C2 and C3) and the generated password is generated, and the generated Bates stamp is superimposed as an image onto the read image data to generate image data including the Bates stamp, and then the image data is stored in the HDD 15 (Step S31). The present embodiment was described assuming that the company name of the Bates stamp is BB Company.

As for the generation method of password, for example, a message digest is generated by a one-way function, and then the generated message digest is set as the password.

In Step S31, for example, image data F5 on which a Bates stamp F6 including a company name F61, a date F62, a serial number F63 and a password F64 is superimposed is generated as shown in Fig. 11.

Then, in the MFP 10, the password, the serial number, and the image data on which the Bates stamp is superimposed are sent to the DB server 30 by the communication section 18 through the communication network N (Step S32).

Then, in the DB server 30, information of requiring a time stamp is sent to the TSA server 40 by the communication section 36 through the communication network N (Step S33). In Step S31, the hash value of the received image data is calculated by a predetermined hash function, and assuming that the calculated hash value is included in the information of requiring the time stamp.

Then, in the TSA server 40, a time stamp is generated based on the information of requiring a time stamp that is received by the communication section 46 (Step S34). For example, in the TSA server 40, a current time information request is sent to a TA (Time Authority) server provided on the communication network N not shown, and the current time information thereof is received from the TA server. Then, the hash value included in the received information of requiring a time stamp and the received current time information are encrypted using a TSA secret key to generate a signature value. Thereby, the time stamp including the hash value, current time information and signature value is generated.

Then, in the TSA server 40, the generated time stamp is sent to the DB server 30 by the communication section 46 through the communication network N (Step S35). Then, in the DB server 30, the image data including the Bates stamp obtained in Step S32, the password, the time stamp obtained in Step S35 and the serial number are associated with each other, and they are stored as a DB record of the image data (Step S36).

Next, a verification process of the genuineness of the image data including the Bates stamp is described.

In the MFP 10, assuming that the image data including the Bates stamp generated in Steps S31 to S36 is recorded onto recording sheets by the image recording section 20 to generate a printed matter, and the generated printed matter is distributed. Then, considering a case in which a certain user of the PC 50 obtains the printed matter and confirms the genuineness of the image of the printed matter. The user visually obtains the company name, serial number and password from the Bates stamp recorded onto the printed matter.

At first, in the PC 50, inputs of the obtained company name, serial number and password from the user are received through the input section 52 (Step S37). Then, in the PC 50, the input serial number and password are sent to a DB server (assumed as the DB server 30 in the embodiment) of the input company name by the communication section 56 through the communication network N (Step S38). In the DB server 30, it is determined whether the received password is correct (the input password is stored in the memory section 35) or not, and if the password is correct, the access from the PC 50 to the DB server 30 becomes available, while if the password is not correct, the access from the PC 50 to the DB server 30 is prohibited.

In the state in which the access from the PC 50 to the DB 30 is available, in the DB server 30, the image data and time stamp corresponding to the received serial number are retrieved from the memory section 35 (Step S39). More particularly, in the DB of the image data stored in the memory section 35, the image data and time stamp with the received serial number as a key are retrieved. When they are not retrieved, in the DB server 30, for example, a message that the image data and the time stamp are not retrieved is sent to the PC 50 by the communication section 36 through the communication network N. In the PC 50, the message received by the communication section 56, saying that the image data and the time stamp are not retrieved, is displayed in the display section 54 to notify the user about it.

When the image data and the time stamp are retrieved, in the DB server 30, the retrieved image data and time stamp are sent to the PC 50 which is the serial number transmission source by the communication section 36 through the communication network N (Step S40). Then, in the PC 50, the information of requiring a TSA public key and hash value is sent to the TSA server 40 by the communication section 56 through the communication network N (Step S41). For example, it is assumed that the information of requiring a TSA public key and hash value includes the received time stamp.

Then, in the TSA server 40, the hash value stored in the memory section 45 is retrieved with the time information within the time stamp received by the communication section 46 as a key (Step S42). When the hash value is not retrieved, it is determined that the time stamp is altered, and a message of the time stamp alteration is sent to the PC 50 by the communication section 46 through the communication network N, and the message of the time stamp alteration received by the communication section 56 is displayed in the display section 54 in the PC 50.

Then, in the TSA server 40, when the hash value is retrieved, the retrieved hash value and the TSA public key are sent to the PC 50 by the communication section 46 through the communication network N (Step S43). Then, in the PC 50, the verifications of the time stamp, the image data, and the hash data are carried out, and the verification results and the image data are displayed in the display section 54 (Step S44).

In Step S44, in the verification of the time stamp, the signature value of the time stamp received in Step S40 is decoded using the TSA public key received in Step S43 to obtain the hash value and the time information, and then it is determined whether the hash value and time information that are obtained through the decode and the hash value and time information within the time stamp are identical to each other. If the hash values and the time information are not identical, it is determined the time stamp is altered. If the hash values and the time information are identical, it is determined the time stamp is valid without being altered.

It is assumed that the hash function used in Step S31 is stored in the memory section 55 of the PC 50. When the time stamp is not altered, the verification of the image data is carried out. In the image data verification, a hash value is calculated using the hash function stored in the memory section 55 from the image data received in Step S40, and it is determined whether the calculated hash value and the hash value received in Step S43 are identical to each other. If the hash values are not identical, it is determined the image data is altered. If the hash values are identical, it is determined the image data is valid without being altered.

When the image data is not altered, the verification of the hash value is carried out. In the hash value verification, it is determined whether the hash value received in Step S43 and the hash value included in the time stamp are identical to each other. If the hash values are not identical, it is determined the received time stamp and image data are altered. If the hash values are identical, it is determined the received time stamp and image data are valid without being altered. The verification results are displayed in the display section 54. Further, the image data received from the DB server 30 is displayed in the display section 54, wherein the displayed image data and the image data of the printed matter are visually compared by the user, and when they are identical, the genuineness of the image data can be confirmed.

As described above, according to the present embodiment, the uniqueness of the image data generated through the image reading of the MFP 10 can be proved by the Bates stamp, as well as the uniqueness of the image data can be proved more exactly by the time stamp. Further, the genuineness of the image data can be confirmed by comparison of the image data displayed in the display section 54 and the image data of the printed matter.

Further, the access of the DB server 30 is authorized by password, so that the security of the image data and time stamp can be increased.

Further, the message digest generated by the one-way function from the image data generated by the image reading is set as a password, so that the password can be generated easily.

Incidentally, the above descriptions in the embodiments are examples of the preferred image storing device, image storing system and image data control apparatus according to the present invention which it is not limited to these embodiments.

For example, in the above embodiments, the MFP 10 is described as the image storing device, but is not limited to this context, and may be an image storing device having at least the image storing function such as a copier or a scanner. Further, the description was made about the configuration in which the generated image data is the multi-level image data including the binary of black and white or the intermediate color between black and white, but is not limited to this context, and may be color image data.

Further, the second embodiment was described assuming that the password is generated in MFP 10, but is not limited to this context, and the configuration is allowable in which the password is generated by the DB server 40 and the like and the generated password is sent to the MFP 10.

According to Structure 1, the uniqueness of the second image data by the first serial number across jobs can be proved.

According to Structure 2, the uniqueness of the second image data generated by the image reading can be proved.

According to Structure 3, the uniqueness of the second image data more simply by the character information can be proved.

According to Structure 4, the associated first serial number for each piece of character information can be proved.

According to Structure 5, the uniqueness of the second image data more simply can be proved, because each of the numbers within the serial number is shortened.

According to Structure 6, the uniqueness of the second image data more simply can be proved, because the recognition of each of the numbers within the serial number is easy.

According to Structure 7, the uniqueness of the second image data for each page can be proved.

According to Structure 8, the uniqueness of the second image data for each job can be proved.

According to Structure 9, the second serial number without across jobs by the second counter can be simply generated.

According to Structure 10, the third serial number that facilitates retrieving the second image data which is the insertion destination, can be simply generated.

According to Structure 11, the image data control apparatus can be caused to control the second image data.

According to Structure 12, the security of the second image data by password can be increased.

According to Structure 13, a password can be easily generated.

According to Structure 14, the uniqueness of the second image data can be proved more exactly by the time stamp.

According to Structure 15, the uniqueness of the second image data more exactly by the time stamp can be proved, as well as the security of the time stamp by password can be increased.

According to Structure 16, a password can be easily generated.

According to Structure 17, the uniqueness of the second image data can be proved more exactly by the first serial number across jobs and the time stamp.

According to Structure 18, the uniqueness of the second image data can be proved more exactly by the first serial number across jobs and the time stamp, as well as the security of the time stamp by password can be increased.

## Claims

1. An image storing device comprising:
(a) a first memory section for storing counted value of a first counter that counts a first serial number given across jobs each including at least one image;
(b) a first control section for superimposing the first serial number of the first counter as an image onto each of first image data of the jobs to generate second image data; and
(c) an image memory section for storing the second image data.

2. The image storing device of claim 1, further comprising an image reading section for reading a document to generate the first image data, wherein the first control section superimposes the first serial number as an image onto the first image data generated by the image reading section to generate the second image data.

3. The image storing device of claim 1 or 2, wherein the first control section superimposes character information as an image onto the first image data to generate the second image data.

4. The image storing device of claim 3, wherein the first memory section stores counted values of a plurality of first counters associated with a plurality of pieces of character information respectively, the number of the plurality of first counters is equal to or larger than the number of pieces of the character information, and the first control section selects character information from the plurality of pieces of character information and superimposes the first serial number of the first counter associated with the selected character information, together with the selected character information as an image onto the first image data to generate the second image data.

5. The image storing device of any one of claims 1 to 4, wherein the first control section superimposes a serial number including the first serial number, by dividing into a plurality of parts, as an image onto the first image data to generate the second image data.

6. The image storing device of claim 5, wherein the plurality of parts have digits less than eight digits respectively.

7. The image storing device of any one of claims 1 to 6, wherein the first serial number is different for each page.

8. The image storing device of any one of claims 1 to 6, wherein the first serial number is different for each job.

9. The image storing device of any one of claims 1 to 8, wherein the first memory section stores counted value of a second counter for counting a second serial number given for each page without across jobs, and the first control section superimposes a serial number including the second serial number as an image onto the first image data to generate the second image data.

10. The image storing device of any one of claims 1 to 9, wherein the first memory section stores counted value of a third counter for counting a third serial number given for each of the first image data to be inserted into the second image data without across jobs, and when inserting the first image data, the first control section designates the second image data which is an insertion destination thereof, and superimposes a serial number, including the third serial number and corresponding to the second image data of the insertion destination, as an image onto the first image data to generate the second image data into which the first image data is inserted.

11. The image storing device of any one of claims 1 to 10, further comprising a first communication section for communicating with an image data control apparatus for controlling the second image data, wherein the first control section sends the generated second image data and the first serial number to the image data control apparatus through the first communication section.

12. The image storing device of claim 3 or 4, further comprising:
a first communication section for communicating with an image data control apparatus which controls the second image data; and
a password generation section for generating a password corresponding to the second image data,
wherein the first control section superimposes the character information including the password generated by the password generation section as an image onto the first image data to generate the second image data, and sends the generated second image data and the first serial number to the image data control apparatus through the first communication section.

13. The image storing device of claim 12, wherein the password generation section generates a message digest corresponding to the first image data using a one-way function, and sets the generated message digest as the password.

14. An image storing system comprising:
the image storing device and the image data control apparatus of claim 11, wherein the image data control apparatus comprises:
a second communication section for communicating with the image storing device and an external device;
a second memory section for storing the second image data;
a time stamp obtaining section for obtaining a time stamp corresponding to the second image data received from the image storing device through the second communication section; and
a second control section for storing the received second image data in the second memory section, by associating with the first serial number received from the image storing device through the second communication section in accordance with the second image data and the time stamp obtained by the time stamp obtaining section, and when receiving the first serial number from the external device through the second communication section, the second control section reading the second image data and time stamp corresponding to the received first serial number from the second memory section, and sending the read second image data and time stamp to the external device through the second communication section.

15. An image storing system comprising:
(a) the image storing device of claim 3 or 4; and
(b) an image data control apparatus for controlling the second image data generated by the image storing device,
wherein the image storing system includes a password generation section for generating a password corresponding to the second image data,
the image storing device includes a first communication section for communicating with the image data control apparatus,
the first control section superimposes the character information including the password generated by the password generation section as an image onto the first image data to generate the second image data, and sends the generated second image data and the first serial number to the image data control apparatus through the first communication section,
the image data control apparatus includes:
(1) a second communication section for communicating with the image storing device and an external device;
(2) a second memory section for storing the second image data;
(3) a time stamp obtaining section for obtaining a time stamp corresponding to the second image data received from the image storing device through the second communication section; and
(4) a second control section for storing the received second image data in the second memory section, by associating with the first serial number received from the image storing device through the second communication section in according with the second image data, the time stamp obtained by the time stamp obtaining section and the password generated by the password generation section, for receiving the first serial number and the password from the external device through the second communication section, and for reading the second image data and time stamp corresponding to the received password and to the first serial number from the second memory section and sending to the external device through the second communication section when the received password is identical to the password stored in the second memory section.

16. The image storing system of claim 15, wherein the password generation section generates a message digest corresponding to the first image data using a one-way function, and sets the message digest as a password.

17. An image data control apparatus comprising:
(a) a communication section for communicating with an image storing device that superimposes a first serial number given across jobs each including at least one image as an image onto first image data of the jobs to generate and store second image data, and to an external device;
(b) a memory section for storing second image data;
(c) a time stamp obtaining section for obtaining a time stamp corresponding to the second image data received from the image storing device through the communication section; and
(d) a control section for storing the received second image data in the memory section, by associating with the first serial number received from the image storing device through the communication section in accordance with the second image data and the time stamp obtained by the time stamp obtaining section, when receiving the first serial number from the external device through the communication section, the control section reading the second image data and time stamp corresponding to the received first serial number from the memory section, and sending them to the external device through the communication section.

18. An image data control apparatus comprising:
(a) a communication section for communicating with an image storing device that superimposes a first serial number given across jobs each including at least one image and a password as an image onto first image data of the jobs to generate and store second image data, and to an external device;
(b) an image memory section for storing second image data;
(c) a time stamp obtaining section for obtaining a time stamp corresponding to the second image data received from the image storing device through the second communication section; and
(d) a control section for storing the received second image data in the memory section, by associating with the first serial number received from the image storing device through the communication section in accordance with the second image data, the time stamp obtained by the time stamp obtaining section and a password, receiving the first serial number and the password from the external device through the communication section, and for reading the second image data and time stamp corresponding to the received password and to the first serial number from the memory section and sending them to the external device through the communication section when the received password is identical to the password stored in the second memory section.
